# EUROPEAN PATENT SPECIFICATION

(11) **EP 2 802 206 B1**
(45) Date of publication and mention of the grant of the patent: **21.08.2019**
(21) Application number: 11813707.4
(22) Date of filing: 23.12.2011
(51) Int. Cl.: A01K 1/03, A01K 31/04

(54) **BOTTOM ELEMENT FOR A PET'S CAGE**
BODENELEMENT FÜR EINEN HAUSTIERKÄFIG
ÉLÉMENT FOND POUR CAGE D'ANIMAL DOMESTIQUE

(43) Date of publication of application: 19.11.2014
(73) Proprietor: Ferplast SPA, 36070 Castelgomberto (VI) (IT)
(72) Inventor: VACCARI, Carlo, 36070 Castelgomberto (VI) (IT)
(74) Representative: Sandri, Sandro
(86) International application number: PCT/IB2011/055948
(87) International publication number: WO 2013/093573

(56) References cited:
- EP-A1- 1 731 028
- JP-A- 2003 210 060
- US-A- 4 586 463
- US-A1- 2009 260 579
- US-B1- 6 763 784

## Description

### TECHNICAL FIELD

This invention relates to the production of a plastic bottom element designed for use in cages for pets, in particular pet rodents and/or birds.

More specifically, this invention relates to a bottom element made of plastic and designed for use in pet rodent and/or bird cages characterized by a structure such that the walls of the bottom element, although the product is injection moulded, are vertical and not oblique, so that, basically, an excellent level of maintainability is achieved by the pet cage.

The pet cage bottom element according to the invention is based on a concept which avoids the drawbacks of traditional pet cage side walls which are customarily highly tapered so as to allow easy extraction from the moulds.

To avoid these drawbacks, the bottom element according to the invention is made up of 3 well distinct components, namely, a bottom element base (1 piece), a long side (2 pieces) and a short side (2 pieces).

The structural design concept of these components is such that the bottom element can be obtained by fastening them to each other and so that the finished product guarantees the same features as products of the same kind but made in a single piece (durability, solidity, dirt containment and so on).

This invention is applicable to the field of components and accessories for pets, in particular, in the sector of cages for rabbits or the like.

### BACKGROUND ART

Plastic bottom elements for pet rodent or bird cages currently available on the market come in many different constructional forms which close the base of the cage to create the living environment for the animal and a means for collecting the animal's droppings.

Most traditional bottom elements are made of plastic not only for reasons of low cost but also for durability and ease of cleaning.

The low cost is due in particular to the fact that the product is made by injection moulding technology which, on the one hand, although it calls for high initial investments, allows the achievement of high productivity with very rapid cycle times (in the order of one minute) and, on the other, allows a reduction of thickness of the parts made, thereby reducing the quantity of material used.

The main drawback of this production method is due to the fact that the product, because it is made as a single part, must have highly tapered side walls so as to avoid the formation of undercuts or, in any case, so that it can be easily extracted from the mould. For this reason, the walls are tapered by up to as much as 15°.

The prior art also teaches the construction of moulds which allow bottom elements with vertical walls to be produced using hydraulic and/or mechanical mould drive. In this case, however, the complexity and overall dimensions of the mould nullify the low-cost advantages of such solutions because they necessitate oversize presses to accommodate the mould which includes such mechanical and/or hydraulic drive and, consequently, the investment required is excessive and, in practice, this type of product is little used.

Another aspect which calls for the flared tapering of the walls of the bottom element, other than the production aspects, relates to storage and transportation. In effect, bottom elements with tapered walls can be stacked on top of one another in such a way as to occupy less transportation space, with obvious advantages in terms of the product's end price. Indeed, it should be considered that the pet market is particularly sensitive to the price factor, especially where high sales targets are involved.

The initial product investment costs necessary for the construction of the steel moulds for plastic injection weigh heavily and, precisely because of that, the economic aspect of storage is of fundamental importance.

All of these aspects make it clear how advantageous the oblique walls of the bottom element are from the point of view of product cost: possibility of manufacture using injection moulds, high productivity, lower transportation costs, lower storage space requirement.

This state of the art, which represents all of the products available on the market, has a major drawback, however, and that is: since the outer dimensions of the bottom elements are fixed by commercial practice (for example, 80x50, 100x50, 100x60, 120x60), the flared shape of the oblique walls considerably reduces the living space available to the pet animal. For example, although the outer dimensions of a traditional best seller on the market are approximately 100x60cm, the effective living space available to the pet animal, for example a rabbit, might be 91x51cm, that is, approximately 9 cm less in length and breadth, precisely because of the flared walls, which are usually inclined at an angle of 12-15°.

Document US 2009/026579 A1 discloses a cage for small animals including a generally cloese base having an open top; a grating structure upon the base forming a closed structure for containing an animal therein; and a refuse catcher surrounding the grating structure and removably fastened to the base so as to permit the refuse catcher to be removed from the base by being detached from the base and moved upward away from the base without removing the grating structure from the base.

Document US-A-4586463 discloses a bird cage having a lower drawer assembly movable between four positions. The double drawer assembly allows the lower assembly to be completely cleaned of debris without to confine or capture the bird.

Document EP-A1-1731028 discloses a pet's cage having a disposable, foldable bottom portion made of laminated cardboard.

Document JP2003 210060 A discloses a bottom element for a cage for a small animal which is translucent and can be disassembled.

Document US 6763784 B1 describes a modular cage with a bottom element made of transparent vertical panels which are slidably embedded in corner pipes.

### DESCRIPTION OF THE INVENTION

This invention has for an aim to provide a base for pet cages, in particular for rabbits or the like, which can overcome, or at least reduce, the above mentioned drawbacks.

Indeed, the aim of the invention is to provide a base for pet cages which is no longer made in a single piece but is made up of separate parts fastenable to each other to obtain a bottom element whose side walls are mainly vertical and no longer oblique, thereby enhancing the qualities of the features of products of the same kind but made in a single piece, since this solution basically increases the living space available to the pet animal.

This is obtained by a bottom element for cages for rabbits, birds or the like whose features are described in the claim 1.

The dependent claims describe advantageous embodiments of the invention.

Besides the advantages deriving from constructional simplicity, the main advantages of the invention regard, above all, the fact that the production of separate parts by injection moulding does not present production constraints which require the walls to be inclined at an angle, since there are no longer undercuts and, hence, the side walls of the product, when assembled, are perfectly or almost vertical, thereby increasing the usable internal surface and, moreover, overcoming the problems linked to compliance with national regulations.

For example, considering equal outer dimensions (e.g. in 100x60 sizes), the usable inside surface of the bottom element can be increased in the order of 20%.

Furthermore, the fact that the bottom element can be dismantled allows significant reductions of the space required for transportation compared to traditional bottom elements with oblique walls, with obvious advantages also for sales in individual packages. In effect, unlike in the past, the market requires products packed in individual boxes (each containing a single product) instead of products packed in multiple boxes (containing 3 or 4 products together, where the stackability of the bottom elements is important to reduce the space requirement for transportation).

Another important advantage deriving from the use of this structural concept is that the components can be made in different colours, thus creating a product which is highly original from an aesthetic viewpoint.

### DESCRIPTION OF THE DRAWINGS

Other features and advantages of the invention will become evident on reading the following description of one embodiment of the invention, given as a non-limiting example, with the help of the accompanying drawings, in which:

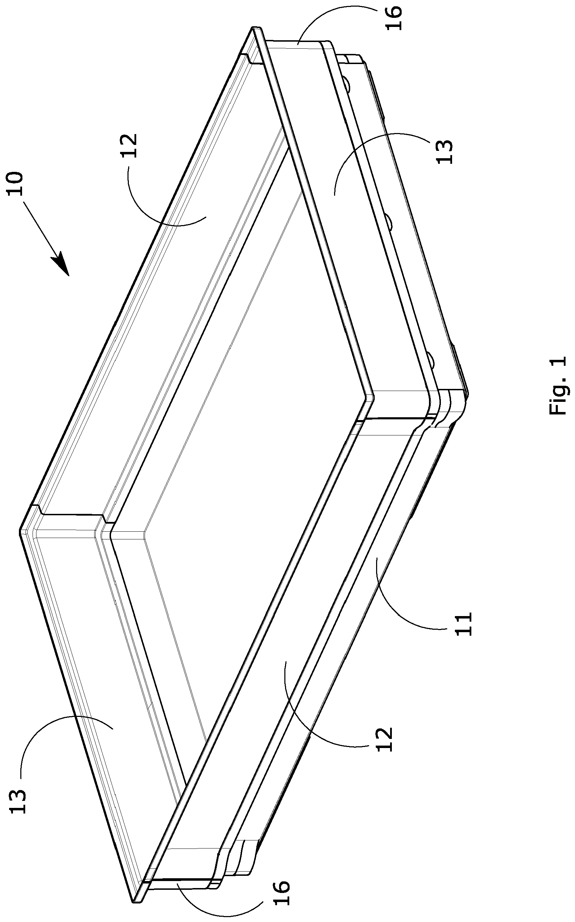

- Figure 1 is a schematic perspective view showing in its entirety the bottom element for pet cages according to the invention;

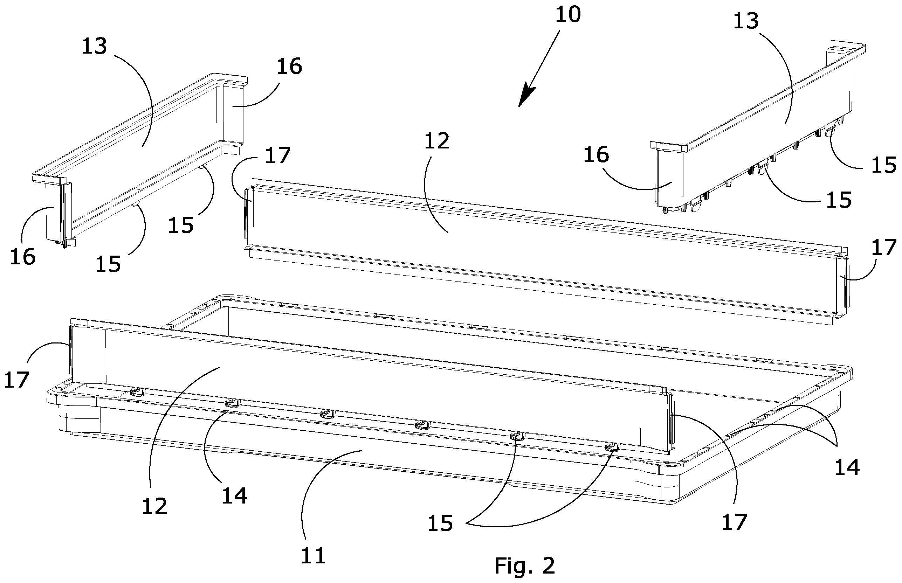

- Figure 2 illustrates the bottom element schematically, showing the components in an exploded view;

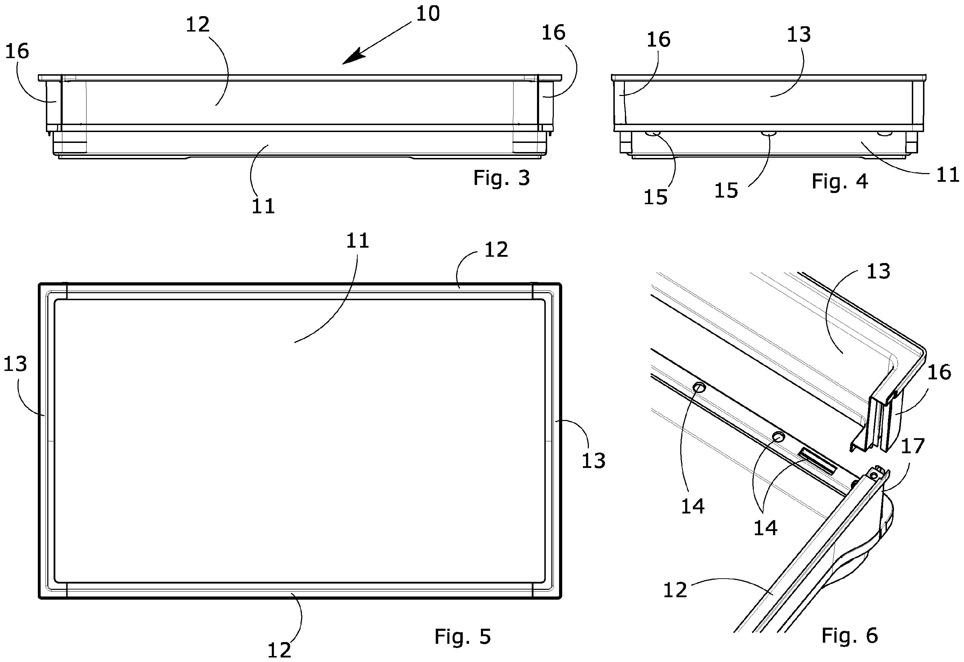

- Figures 3, 4 and 5 schematically illustrate the bottom element according to the invention in front, side and plan views, respectively;
- Figure 6 schematically illustrates a detail showing the corner joint.

### DESCRIPTION OF A PREFERRED EMBODIMENT OF THE INVENTION

With reference to the accompanying drawings, the cage bottom element forming the object of the invention is labelled 10 in its entirety and is made up of three well distinct components:
- base 11 of the bottom element (1 piece);
- long side 12 (2 pieces);
- short side 13 (2 pieces).

The structural design of the above mentioned three components is such that they can be easily fastened to each other to obtain a bottom element having the same features, such as, for example, durability, solidity, dirt containment and so on, as products of the same kind but made in a single piece.

The three components, consisting of one base 11, two long sides 12 and two short sides 13, are made by separate injection moulding, where the base 11 of the bottom element has along its perimeter an edge with slots and/or holes 14 for coupling it to the side walls 12 and 13, and where the height of the base may be very limited, for example approximately 1 to 5 cm.

The components constituting the front or rear wall or long side 12, which are the same, in turn have on the bottom of them fasteners 15 which are made to slot and slide in bayonet fashion in the respective slots 14 formed in the base 11 of the bottom element.

The assembly is then secured and made fast by inserting the two short sides 13 which in this case comprise corner sectors 16 on the right and left of the bottom element, respectively, which fit into lateral guides 17 made on the ends of the long sides and are then fastened to the base through one or more teeth 15 which snap into matching holes or slots 14.

In one advantageous embodiment, the teeth 15 can be unfastened by the user through the agency of a suitable tongue so that the bottom can be dismantled for cleaning or storage after use.

As may be appreciated, the bottom element according to the invention made in this way does not have production constraints such as undercuts which require the walls to be inclined and which lead to the well-known problems of the prior art mentioned above.

Consequently, the bottom element 10, when assembled, has side walls which are perfectly vertical, or almost vertical, thereby increasing the usable inside surface and also overcoming the problems linked to compliance with national regulations.

For example, considering equal outer dimensions (e.g. 100x60cm), the usable inside surface of the bottom element can be increased in the order of 20%.

Furthermore, the fact that the bottom element can be dismantled makes it possible to significantly reduce the space required for transportation compared to traditional bottom elements with oblique walls, with obvious advantages also for sales in individual packages.

In effect, unlike in the past, the market requires products packed in individual boxes (each containing a single product) instead of products packed in multiple boxes containing two or more products together, where the stackability of the bottom elements is important to reduce the space requirement for transportation.

A further important advantage deriving from the use of this structural concept is that different colours can be used for the different components, thus creating a product which is highly original also from an aesthetic viewpoint.

## Claims

1. A bottom element for cages for pets such as rodents, birds or the like, the cage consisting of a grid structure with, at the base of it, said bottom element (10) being made of plastic adapted to serve as a containment, housing and collecting receptacle of the cage, wherein the bottom element (10) is made up of five different components, namely a base (11) having a height ranging between 1 and 5 cm, two long sides (12) and two short sides (13), said long (12) and short (13) sides constituting the side walls of said bottom element, the components being made as separate parts obtained by injection moulding whereby the base (11) is coupled to both the long sides (12) and the short sides (13), and the long sides (12) are coupled to the short sides (13) of said bottom element whereby, in an assembled state, the side walls of the bottom element are substantially vertical, and at least the two short sides comprise corner sectors on the right and left of the bottom element, respectively, which fit into vertical lateral guides made on the ends of the long sides and are then fastened to the base through one or more teeth which snap into matching holes or slots.

2. A bottom element according to claim 1, **characterized in that** the base (11) of the bottom element (10) has along its perimeter an edge with said slots and/or holes (14).

3. A bottom element according to any one of the preceding claims, **characterized in that** at least the components constituting the front or rear wall or long side (12), which are the same, have on the bottom of them fasteners (15) which are made to slot and slide in bayonet fashion in further respective slots (14) formed in the base (11) of the bottom element.

4. A bottom element according to any one of the preceding claims, **characterized in that** said different components (11, 12, 13) which constitute the bottom element (10) are made of a material having different colours.

## Patentansprüche

1. Bodenelement für Käfige für Haustiere, wie etwa Nagetiere, Vögel oder dergleichen, wobei der Käfig aus einer Gitterstruktur besteht, an deren Unterteil das Bodenelement (10) aus Kunststoff besteht, das geeignet ist, als Eindämm-, Aufnahme- und Auffangbehälter des Käfigs zu dienen, wobei das Bodenelement (10) aus fünf verschiedenen Komponenten besteht, nämlich einem Unterteil (11) mit einer Höhe zwischen 1 und 5 cm, zwei langen Seiten (12) und zwei kurzen Seiten (13), wobei die langen Seiten (12) und die kurzen Seiten (13) die Seitenwände des Bodenelements bilden, wobei die Komponenten als separate Teile hergestellt werden, die durch Spritzgussverfahren erhalten werden,
wobei das Unterteil (11) sowohl mit den langen Seiten (12) als auch mit den kurzen Seiten (13) gekoppelt ist, und die langen Seiten (12) mit den kurzen Seiten (13) des Bodenelements gekoppelt sind, wobei im montierten Zustand die Seitenwände des Bodenelements im Wesentlichen vertikal sind, und mindestens die beiden kurzen Seiten Eckabschnitte auf der rechten bzw. linken Seite des Bodenelements umfassen, die in vertikale Seitenführungen an den Enden der langen Seiten passen und dann durch eine oder mehrere Zähne, die in passende Löcher oder Schlitze einrasten, an dem Unterteil befestigt werden.

2. Bodenelement nach Anspruch 1, **dadurch gekennzeichnet, dass** das Unterteil (11) des Bodenelements (10) entlang seines Umfangs eine Kante mit den Schlitzen und/oder Löchern (14) aufweist.

3. Bodenelement nach einem der vorhergehenden Ansprüche, **dadurch gekennzeichnet, dass** mindestens die Komponenten, die die Vorder- oder Rückwand oder die lange Seite (12) bilden, die gleich sind, auf dem Boden Befestigungselemente (15) aufweisen, die in weiteren jeweiligen Schlitzen (14), die in dem Unterteil (11) des Bodenelements ausgebildet sind, zum Schlitzen und Gleiten bajonettartig ausgeführt sind.

4. Bodenelement nach einem der vorhergehenden Ansprüche, **dadurch gekennzeichnet, dass** die verschiedenen Komponenten (11, 12, 13), die das Bodenelement (10) bilden, aus einem Material mit unterschiedlichen Farben hergestellt sind.

## Revendications

1. Élément de fond pour cages à animaux domestiques tels que des rongeurs, des oiseaux ou similaires, la cage consistant en une structure en grille pourvue, à sa base, dudit élément de fond (10) en matière plastique adapté pour servir de réceptacle de confinement, de logement et de collecte de la cage, dans lequel l'élément de fond (10) est formé de cinq composants différents, à savoir une base (11) de hauteur comprise entre 1 et 5 cm, deux grands côtés (12) et deux petits côtés (13), lesdits grands (12) et petits (13) côtés constituant les parois latérales dudit élément de fond, les composants étant réalisés sous la forme de pièces séparées obtenues par moulage par injection,
par lesquels la base (11) est accouplée à la fois aux grands côtés (12) et aux petits côtés (13), et les grands côtés (12) sont accouplés aux petits côtés (13) dudit élément de fond, par lesquels, à l'état assemblé, les parois latérales de l'élément de fond sont, sensiblement verticales et au moins les deux petits côtés comprenant des secteurs de coin à droite et à gauche de l'élément de fond qui s'insèrent respectivement dans des guides latéraux verticaux réalisés aux extrémités des grands côtés et qui sont ensuite fixés à la base par le biais d'au moins une ou plusieurs dents qui s'encliquètent dans des trous ou fentes correspondants.

2. Élément de fond selon la revendication 1, **caractérisé en ce que** la base (11) de l'élément de fond (10) comporte sur son périmètre un bord pourvu desdites fentes et/ou desdits trous (14).

3. Élément de fond selon l'une des revendications précédentes, **caractérisé en ce qu'**au moins les composants constituant la paroi avant ou arrière ou le grand côté (12), qui sont identiques, ont sur leur fond des attaches (15) qui sont faites pour s'encastrer et coulisser à la manière d'une baïonnette dans d'autres fentes respectives (14) ménagées dans la base (11) de l'élément de fond.

4. Élément de fond selon l'une quelconque des revendications précédentes, **caractérisé en ce que** lesdits différents composants (11, 12, 13) qui constituent l'élément de fond (10) sont réalisés dans un matériau ayant différentes couleurs.
